# EUROPEAN PATENT APPLICATION

(11) **EP 3 096 509 A1**
(43) Date of publication of application: **23.11.2016**
(21) Application number: 14879146.0
(22) Date of filing: 14.01.2014
(51) Int. Cl.: H04N 1/41, H04N 21/24

(54) **IMAGE PROCESSING PROGRAM, DISPLAY PROGRAM, IMAGE PROCESSING METHOD, DISPLAY METHOD, IMAGE PROCESSING DEVICE, AND INFORMATION PROCESSING DEVICE**

(71) Applicant: Fujitsu Limited, Kawasaki-shi, Kanagawa 211-8588 (JP)
(72) Inventor: SHIMADA, Daichi, Kawasaki-shi, Kanagawa 211-8588 (JP); HASHIMA, Masayoshi, Kawasaki-shi, Kanagawa 211-8588 (JP)
(74) Representative: Cooper-Rolfe, Elizabeth Louise
(86) International application number: PCT/JP2014/050486
(87) International publication number: WO 2015/107622

(57) **Abstract**

An image processing apparatus (101) divides an image into multiple regions based on pixel values of pixels included in the image. The image processing apparatus (101) creates positional information (103) for displaying regions having the same shapes as respective regions of the multiple regions at positions on a screen identified from positions of the respective regions in the image. The image processing apparatus (101) transmits the created positional information (103) to an information processing apparatus (102). On the other hand, the information processing apparatus (102) receives the positional information (103). Based on the positional information (103), the information processing apparatus (102) identifies positions on a screen of the information processing apparatus (102) from the positions of the respective regions in the image. The information processing apparatus (102) displays the regions having the same shapes as the respective regions at the identified positions.

## Description

### TECHNICAL FIELD

The present invention relates to an image processing program, a display program, an image processing method, a display method, an image processing apparatus, and an information processing apparatus.

### BACKGROUND ART

Conventionally, a server creates an image to be displayed on a screen of a client. The server creates the image based on operational input from a user of a client connected through a network and transmits image information of the created image to display the image on the screen of the client.

Related techniques include, for example, a technique of chanting a color count, which impacts the amount of data transferred. The color count is changed based on a network load state and, for example, the color count is decreased when a network load is high and increased when the network load is low. Another related technique converts pixels of a color document image into indexes, sets a color value corresponding to the index of the largest pixel number as a background color to generate a partial binary image for each of the indexes, and compresses the binary images according to a compression order.

In another technique, whether a public line is included in a path between a shared input/output device and a computer device using the input/output device is determined and when a public line is included, information indicating performance equal to or lower than actual performance of the shared input/output device is returned to an apparatus requesting use thereof. In a further technique, a portion of print data is transmitted in advance to a server and, after a print process for other print data is executed, the remaining portion is transmitted to the server.

Patent Document 1: Japanese Laid-Open Patent Publication No. 2008-234389
Patent Document 2: Japanese Laid-Open Patent Publication No. 2004-229261
Patent Document 3: Japanese Laid-Open Patent Publication No. 2000-295311
Patent Document 4: Japanese Laid-Open Patent Publication No. 2008-042241

### DISCLOSURE OF INVENTION

### PROBLEM TO BE SOLVED BY THE INVENTION

However, in the conventional techniques described above, the response performance of a server may drop with respect to an operational input from a user of a client. For example, if a server and a client are connected through a network with low quality, the amount of data transmittable per unit time through the network becomes small or the occurrence of packet loss necessitates retransmission of a packet, resulting in an increase in time required for a client to receive image information for an image from the server.

According to one aspect, one object of the present invention is to provide an image processing program, a display program, an image processing method, a display method, an image processing apparatus, and an information processing apparatus capable of improving response performance with respect to operational user input.

### MEANS FOR SOLVING PROBLEM

According to one aspect of the present invention, an imaging processing program, an image processing method, and an image processing apparatus are proposed that divide an image to be displayed on a screen of an information processing apparatus connected through a network, into plural regions based on a pixel value of pixels included in the image; create positional information that indicates positions of regions that have same shapes as respective regions of the plurality of regions and that are to be displayed at positions on the screen corresponding to positions of the respective regions in the image; and transmit the created positional information to the information processing apparatus.

According to a further aspect of the present invention, a display program, a display method, and an information processing apparatus are proposed that receive positional information from an image processing apparatus, the positional information indicating positions of regions having same shapes as respective regions of plural regions divided from an image to be displayed on a screen of the computer, the regions having the same shapes as the respective regions being displayed at positions on the screen corresponding to positions of the respective regions in the image; and display the regions having the same shapes as the respective regions, at positions on the screen indicated by the received positional information.

### EFFECT OF THE INVENTION

According to one aspect of the present invention, an effect is achieved in a response performance with respect to operational user input is improved.

### BRIEF DESCRIPTION OF DRAWINGS

FIG. 1 is an explanatory diagram of an example of an image process of an image processing apparatus 101 according to an embodiment;
FIG. 2 is a block diagram of an example of hardware configuration of a computer 200;
FIG. 3 is an explanatory diagram of an example of the contents of a positional information packet 300;
FIG. 4 is an explanatory diagram of an example of the contents of a color information packet 400, which includes color information 401;
FIG. 5 is a block diagram of a functional configuration example of the image processing apparatus 101;
FIG. 6 is a block diagram of a functional configuration example of an information processing apparatus 102;
FIG. 7 is an explanatory diagram of a specific example of transmitting positional information 302 and the color information 401;
FIG. 8 is an explanatory diagram of a specific example of creating the positional information 302 and the color information 401;
FIG. 9 is a flowchart of an example of a transmission process procedure;
FIG. 10 is a flowchart of an example of a creation process procedure;
FIG. 11 is a flowchart of an example of a check process procedure;
FIG. 12 is a flowchart of an example of a determination process procedure; and
FIG. 13 is a flowchart of an example of a display process procedure.

### BEST MODE(S) FOR CARRYING OUT THE INVENTION

Embodiments of an image processing program, a display program, an image processing method, a display method, an image processing apparatus, and an information processing apparatus according to the present invention will be described in detail with reference to the accompanying drawings.

### (Example of Image Process)

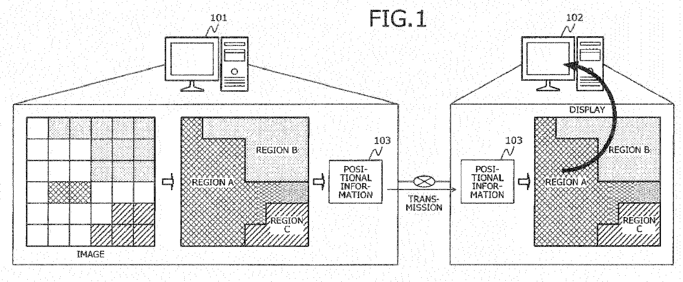

FIG. 1 is an explanatory diagram of an example of an image process of an image processing apparatus 101 according to the present embodiment. The image processing apparatus 101 is a computer that executes an image processing program according to the present embodiment to create positional information 103 of an image displayable on a screen of an information processing apparatus 102 connected through a network. The image processing apparatus 101 transmits the information to the information processing apparatus 102.

The image processing apparatus 101 is a computer that implements a technique of remote desktop, for example. For example, the image processing apparatus 101 executes an operating system (OS), computer aided design (CAD) software, etc. included in the image processing apparatus 101 based on operational input from the information processing apparatus 102 and transmits the positional information 103 of an image representing an execution result. A notebook personal computer, a desktop personal computer, a server, etc. may be employed as the image processing apparatus 101.

The information processing apparatus 102 is a computer that receives the positional information 103 and displays based on the positional information 103, regions having the same shapes as regions divided from an image, at positions on a screen included in the information processing apparatus 102.

The information processing apparatus 102 is a computer that utilizes a technique of remote desktop, for example. For example, the information processing apparatus 102 transmits an operation input to the image processing apparatus 101, receives the positional information 103 of an image representing an execution result, and displays the regions having the same shapes as regions divided from an image. A notebook personal computer, a desktop personal computer, a portable telephone, a smartphone, a personal handy-phone system (PHS), a tablet terminal, etc. may be employed as the information processing apparatus 102.

In FIG. 1, the image processing apparatus 101 divides an image into multiple regions, based on a pixel value of pixels included in the image. For example, the image processing apparatus 101 classifies pixels included in the image into groups depending on a range of pixel values and divides the image into regions including pixels belonging to the same groups.

The image processing apparatus 101 then creates the positional information 103 that indicates positions of regions having the same shapes as respective regions of divided regions to be displayed on the screen, at positions identified from positions of the respective regions in the image. For example, the image processing apparatus 101 creates the positional information 103 and correlates and stores identification information of each of the groups with the coordinates at which the upper left pixel of each of the respective regions is present, the number of pixels present in the downward direction from the upper left pixel, and the numbers of pixels present in the rightward direction from the pixels present in the downward direction.

The image processing apparatus 101 transmits the created positional information 103 to the information processing apparatus 102. For example, the image processing apparatus 101 creates and transmits a packet including the positional information 103 to the information processing apparatus 102. In the following description, a packet that includes the positional information 103 may be referred to as a "positional information packet".

The pixel value is a value that represents the color of a pixel. For example, the pixel value is expressed in the RGB format. The RGB format is an expression format using three primary colors of red, green, and blue. The pixel value may further include a transparency. For example, the pixel value may be expressed in the YCrCb format. For example, the YCrCb format is an expression format using luminance and color difference. For example, the pixel value may be expressed in the HSV format. For example, the HSV format is an expression format using hue, saturation, and brightness.

On the other hand, the information processing apparatus 102 receives the positional information 103. For example, the information processing apparatus 102 receives a positional information packet and extracts the positional information 103 from the positional information packet.

The information processing apparatus 102 identifies positions on the screen of the information processing apparatus 102 from the positions of the respective regions in the image based on the positional information 103. For example, based on the positional information 103, the information processing apparatus 102 identifies coordinates on the screen of the information processing apparatus 102 corresponding to coordinates at which the upper left pixel of each of the respective regions is present in the image.

The information processing apparatus 102 displays the regions having the same shape as the respective regions at the identified positions. For example, based on the positional information 103, the information processing apparatus 102 identifies the number of pixels present in the downward direction from the pixel present at the identified coordinates and the number of pixels present in the rightward direction from the pixels present in the downward direction.

As a result, the image processing apparatus 101 can decrease the amount of data transmitted to the information processing apparatus 102 and reduce the time of transmission to the information processing apparatus 102. Therefore, the information processing apparatus 102 can reduce the time required for receiving the positional information 103 and updating the screen after transmitting the operational input as compared to the time required in a case of receiving the image information. The information processing apparatus 102 may receive the positional information 103 and display the regions having the same shapes on the screen. Since the regions are displayed on the screen of the information processing apparatus 102, a user of the information processing apparatus 102 can view the contours of the regions to comprehend the contents of the image. The image processing apparatus 101 can decrease the amount of data transmitted per unit time to the information processing apparatus 102 and suppress the occurrence of burst traffic.

Although a case where the image processing apparatus 101 transmits the positional information 103 has been described, configuration is not limited hereto. For example, the image processing apparatus 101 may create color information that indicates pixel values that are the same as the pixels included in the respective regions and set for the pixels included in the regions having the same shapes as the respective regions. The image processing apparatus 101 may transmit a packet that includes the color information after transmitting the positional information 103. In the following description, a packet that includes the color information may be referred to as a "color information packet". The information processing apparatus 102 may receive the color information and display the image based on the positional information 103 and the color information.

As a result, the image processing apparatus 101 can cause the information processing apparatus 102 to display the image. Therefore, the user of the information processing apparatus 102 can comprehend the image. The image processing apparatus 101 can decrease the amount of data transmitted per unit time to the information processing apparatus 102 to suppress the occurrence of burst traffic.

### (Hardware Configuration Example of Computer 200)

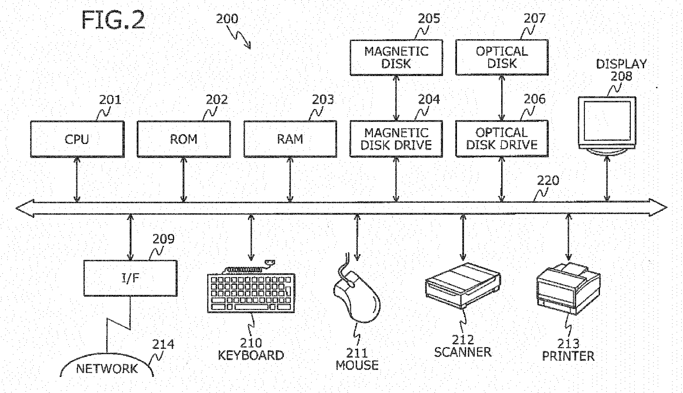

A hardware configuration example of a computer 200 that implements the image processing apparatus 101 according to the embodiment or the information processing apparatus 102 according to the embodiment will be described with reference to FIG. 2.

FIG. 2 is a block diagram of an example of hardware configuration of a computer 200. In FIG. 2, the computer 200 includes a central processing apparatus (CPU) 201, read-only memory (ROM) 202, and random access memory (RAM) 203.

The computer 200 further includes a magnetic disk drive (hard disk drive) 204, a magnetic disk 205, an optical disk drive 206, and an optical disk 207. Further, the computer 200 includes a display 208, an interface (I/F) 209, a keyboard 210, a mouse 211, a scanner 212, and a printer 213. The respective components are connected by a bus 220.

The CPU 201 governs overall control of the computer 200. The ROM 202 stores programs such as a boot program. The ROM 202 stores at least the image processing program according the present embodiment, when the computer 200 implements the image processing apparatus 101. The ROM 202 stores at least the display program when the computer 200 implements the information processing apparatus 102. The RAM 203 is used as a work area of the CPU 201. The RAM 203 may include video RAM (VRAM).

The magnetic disk drive 204, under the control of the CPU 201, controls the reading and writing of data with respect to the magnetic disk 205. The magnetic disk 205 stores data written thereto under the control of the magnetic disk drive 204.

The optical disk drive 206, under the control of the CPU 201, controls the reading and writing of data with respect to the optical disk 207. The optical disk 207 stores data written thereto under the control of the optical disk drive 206, the data being readout from the optical disk 207 by the computer 200.

The display 208 displays data such as documents, images, and functional information in addition to a cursor, icons, and toolboxes. The display 208, for example, may be a liquid crystal display, a plasma display, or the like.

The I/F 209 is connected through a communications line to a network 214 such as a local area network (LAN), a wide area network (WAN) and the Internet, and is connected to other devices through the network 214. The I/F 209 administers an internal interface with the network 214 and controls the input and output of data from external devices. The I/F 209, for example, may be a modem, a LAN, or the like.

The keyboard 213 includes keys for inputting text, numerals, and various types of instructions, and performs data input. Further, a touch panel input pad, a numeric pad, or the like may be adopted. The mouse 211 is used to move the cursor, select a region, or move and change the size of windows. A track ball or a joy stick may be adopted provided each respectively has a function similar to a pointing device.

The scanner 212 optically reads in images and takes in image data into the computer 200. The scanner 212 may have an optical character reader (OCR) function. The printer 213 prints image data and text data. The printer 213, for example, may be a laser printer, an inkjet printer, or the like. One or more of the optical disk drive 206, the optical disk 207, the display 208, the keyboard 210, the mouse 211, the scanner 212, and the printer 213 may be omitted.

### (Contents of Positional Information Packet 300)

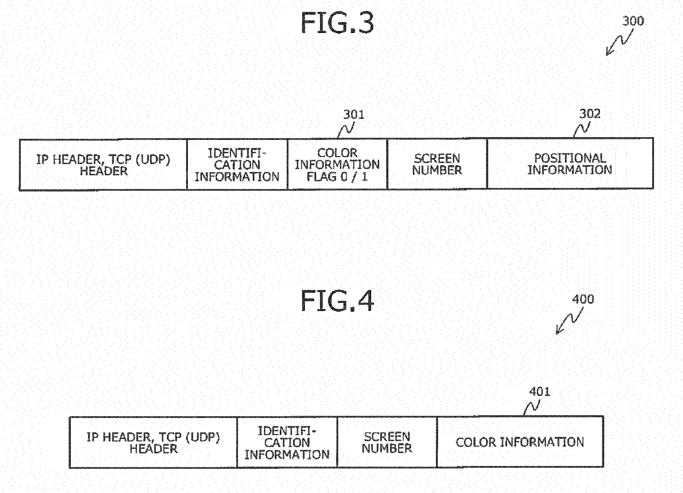

An example of the contents of a positional information packet 300 that includes positional information 302 will be described with reference to FIG. 3.

FIG. 3 is an explanatory diagram of an example of the contents of the positional information packet 300. As depicted in FIG. 3, the positional information packet 300 has fields for headers, identification information, a color information flag 301, a screen number, and the positional information 302. The positional information packet 300 is created by setting information in the respective fields.

The headers are an internet protocol (IP) header and a transmission control protocol (TCP) header. The identification information is information identifying the positional information packet 300.

The color information flag 301 is a flag that indicates whether color information is transmitted. In the example in FIG. 3, a value of "0" or "1" is set as the color information flag 301. The color information flag 301 of "0" indicates that color information is not transmitted. The color information flag 301 of "1" indicates that color information is transmitted. The screen number is a number assigned to the image information of an image. The positional information 302 is information representing a position of a region in an image.

### (Contents of Color Information Packet 400 including Color Information 401)

An example of the contents of a color information packet 400 including color information 401 will be described with reference to FIG. 4.

FIG. 4 is an explanatory diagram of an example of the contents of the color information packet 400, which includes the color information 401. The color information packet 400 has fields for headers, identification information, a screen number, and the color information 401. The color information packet 400 is created by setting information in the fields.

The headers are an IP header and a TCP header. The identification information is information identifying the color information packet 400. The screen number is a number assigned to the image information of an image. The color information 401 is information representing a pixel value of pixels included in a region in an image.

### (Functional Configuration Example of Image Processing Apparatus 101)

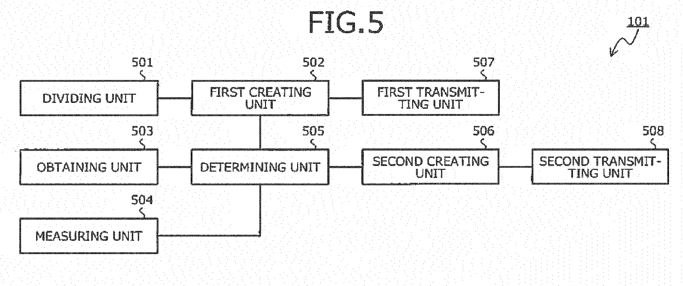

A functional configuration example of the image processing apparatus 101 will be described with reference to FIG. 5.

FIG. 5 is a block diagram of a functional configuration example of the image processing apparatus 101. The image processing apparatus 101 includes a dividing unit 501, a first creating unit 502, an obtaining unit 503, a measuring unit 504, a determining unit 505, a second creating unit 506, a first transmitting unit 507, and a second transmitting unit 508 as functions acting as a control unit.

The functions of the dividing unit 501, the first creating unit 502, the obtaining unit 503, the measuring unit 504, the determining unit 505, the second creating unit 506, the first transmitting unit 507, and the second transmitting unit 508 are implemented by causing the CPU 201 to execute a program stored in a storage apparatus such as the ROM 202, the RAM 203, the magnetic disk 205, and the optical disk 207 depicted in FIG. 2, for example, or by the I/F 209.

The dividing unit 501 divides an image into multiple regions based on pixel values of pixels included in the image to be displayed on a screen of the information processing apparatus 102 connected through a network. For example, the dividing unit 501 divides the image into regions including pixels having pixel values within predetermined ranges. For example, the dividing unit 501 calculates an average value of RGB of the pixel values. The dividing unit 501 then divides the image into regions that include pixels having the calculated average value within a range of 192 to 255, a range of 128 to 191, a range of 64 to 127, and a range of 0 to 63. The division result is stored to a storage area of the RAM 203, the magnetic disk 205, or the optical disk 207, for example. This enables the first creating unit 502 to create positional information that includes information representing the respective regions.

The first creating unit 502 creates the positional information 302, which indicates positions of regions that have the same shapes as the respective regions of the multiple divided regions and that are to be displayed at positions on the screen, corresponding to positions of the respective regions in the image. For example, the first creating unit 502 creates information that represents an entire region or a portion of a region, and correlates coordinates of a pixel in the region, the number of pixels present successively in the downward direction from the pixel, and the numbers of pixels present successively in the rightward direction from the pixels present successively in the downward direction. The first creating unit 502 combines the created information to create information representing the respective divided regions and creates the positional information 302 that includes the information representing the respective divided regions. The first creating unit 502 may add to the information representing the respective divided regions, region IDs corresponding to pixel value ranges of the pixels included in the respective regions. The first creating unit 502 may encode the positional information 302. The created positional information 302 is stored to a storage area of the RAM 203, the magnetic disk 205, or the optical disk 207, for example. As a result, the first creating unit 502 can create the positional information for displaying on the screen, the regions having the same shapes as the respective regions to enable the user of the information processing apparatus 102 to comprehend contents of the image by a reduced data amount as compared to the image information.

The obtaining unit 503 obtains the communication time required for data communication between the image processing apparatus 101 and the information processing apparatus 102. For example, the obtaining unit 503 calculates the difference of the reception time of a packet received from the information processing apparatus 102 and the transmission time thereof included in the packet from the information processing apparatus 102 and thereby obtains the calculated difference as the communication time. The obtaining unit 503 may obtain a communication time per unit data amount.

The obtaining unit 503 may cause the information processing apparatus 102 to calculate the communication time and may receive from the information processing apparatus 102, information representing the communication time. In the following description, the information representing the communication time may be referred to as "network information". The obtained communication time is stored to a storage area of the RAM 203, the magnetic disk 205, or the optical disk 207, for example. As a result, the obtaining unit 503 can obtain the communication time, which is an index representing a bandwidth of the network between the image processing apparatus 101 and the information processing apparatus 102.

The measuring unit 504 measures the time that elapses from reception of an image display request from the information processing apparatus 102. In the following description, information used as an image display request and representing details of operational input of the user of the information processing apparatus 102 may be referred to as "user operation information". For example, the measuring unit 504 uses a timer to measure the time that elapses from the reception time of the display request received from the information processing apparatus 102. The measured elapsed time is stored to a storage area of the RAM 203, the magnetic disk 205, or the optical disk 207, for example. As a result, the measuring unit 504 can measure the elapsed time, which is an index of the time during which the screen of the information processing apparatus 102 is not updated.

The determining unit 505 determines based on the obtained communication time, whether the color information 401 is to be transmitted. For example, the determining unit 505 determines that the color information 401 is not to be transmitted when the communication time is equal to or more than a predetermined time. The determining unit 505 may determine based on the measured elapsed time, whether the color information 401 is to be transmitted. For example, the determining unit 505 determines that the color information 401 is not to be transmitted when the elapsed time is less than a predetermined time.

The determining unit 505 may determine based on the communication time and the elapsed time, whether the color information 401 is to be transmitted. For example, the determining unit 505 determines that the color information 401 is not to be transmitted when the communication time is equal to or more than a predetermined time and the elapsed time is less than a predetermined time. The determined result is stored to a storage area of the RAM 203, the magnetic disk 205, or the optical disk 207, for example. As a result, the determining unit 505 can reduce network traffic by refraining from transmitting the color information 401 when the bandwidth of the network is narrow between the image processing apparatus 101 and the information processing apparatus 102. If the screen of the information processing apparatus 102 is not updated for a predetermined time or more, the determining unit 505 may determine to transmit the color information 401 to allow the user of the information processing apparatus 102 to view the image.

The second creating unit 506 creates based on pixel values of pixels included in respective regions, the color information 401 that indicates pixel values of pixels included in regions having the same shapes displayed on the screen. The second creating unit 506 creates the color information 401 to include a pixel value of an upper left pixel of each of the divided regions. If each of the divided regions includes a pixel having a pixel value different from the upper left pixel, the second, creating unit 500 creates the color information 401 further including the different pixel value and a section including the pixel of the different pixel value in each region. The second creating unit 506 may encode the color information 401. Configuration may be such that the second creating unit 506 does not create the color information 401 if it is determined that the color information 401 is not to be transmitted. The created color information 401 is stored to a storage area of the RAM 203, the magnetic disk 205, or the optical disk 207, for example. As a result, the second creating unit 506 can create the color information for displaying pixels included in the regions having the same shapes as the respective regions with color, whereby the user of the information processing apparatus 102 is able to view the image.

The first transmitting unit 507 transmits the created positional information 302 to the information processing apparatus 102. The first transmitting unit 507 may add to the positional information 302 transmitted to the information processing apparatus 102, a result of determination on whether the color information 401 is to be transmitted. For example, the first transmitting unit 507 transmits the positional information packet 300 to the information processing apparatus 102. As a result, the first transmitting unit 507 can cause the information processing apparatus 102 to receive the positional information 302 and to display based on the positional information 302, the regions having the same shapes as the respective regions.

The second transmitting unit 508 transmits the color information 401 to the information processing apparatus 102 after the first transmitting unit 507 executes a process of transmitting the positional information 302. The second transmitting unit 508 may transmit the color information 401 to the information processing apparatus 102 according to the determination to transmit the color information 401. For example, the second transmitting unit 508 transmits the color information packet 400 to the information processing apparatus 102. As a result, the second transmitting unit 508 can cause the information processing apparatus 102 to receive the color information 401 and to display the image based on the positional information 302 and the color information 401.

### (Functional Configuration Example of Information Processing Apparatus 102)

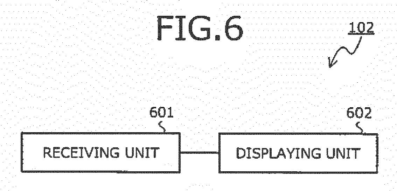

A functional configuration example of the information processing apparatus 102 will be described with reference to FIG. 6.

FIG. 6 is a block diagram of a functional configuration example of the information processing apparatus 102. The information processing apparatus 102 includes a receiving unit 601 and a displaying unit 602 as functions acting as a control unit.

The functions of the receiving unit 601 and the displaying unit 602 are implemented by causing the CPU 201 to execute a program stored in a storage apparatus such as the ROM 202, the RAM 203, the magnetic disk 205, and the optical disk 207 depicted in FIG. 2, for example, or by the I/F 209.

The receiving unit 601 receives the positional information 302 from the image processing apparatus 101. The receiving unit 601 may receive from the image processing apparatus 101, the positional information 302 to which is added, the determination result concerning whether the color information 401 is to be transmitted obtained by the image processing apparatus 101. For example, the receiving unit 601 receives the positional information packet 300 from the image processing apparatus 101 and extracts the positional information 3C2 from the positional information packet 300. The receiving unit 601 also extracts from the positional information packet 300, the color information flag 301 representing a determination result concerning whether the color information 401 is to be transmitted. As a result, the receiving unit 601 can receive the positional information for displaying on the screen, the regions having the same shapes as the respective regions, whereby the user of the information processing apparatus 102 is able to comprehend contents of the image.

The receiving unit 601 receives the color information 401 from the image processing apparatus 101. For example, the receiving unit 601 waits for reception of the color information packet 400 when the color information flag 301 is "1" and receives the color information packet 400 from the image processing apparatus 101 to extract the color information 401 from the color information packet 400. The received information is stored to a storage area of the RAM 203, the magnetic disk 205, or the optical disk 207, for example. As a result, the receiving unit 601 can receive the color information for displaying pixels included in the regions having the same shapes as the respective regions with color, whereby the user of the information processing apparatus 102 is able to view the image.

The displaying unit 602 displays on the screen, the regions having the same shapes at the positions indicted by the received positional information 302. The displaying unit 602 may display the regions having the same shapes on the screen, at the positions indicted by the received positional information 302, when the positional information 302 is received to which a determination result to not transmit the color information 401 is added. For example, if the color information flag 301 is "0," the displaying unit 602 identifies the positions of the regions having the same shapes corresponding to the respective regions, based on information representing the respective regions. The displaying unit 602 displays at the identified positions in the screen, the regions having the same shapes including pixels set to pixel values representative of the pixel value ranges corresponding to the region IDs added to the information representing the respective regions. As a result, the displaying unit 602 can display the regions having the same shapes as the respective regions on the screen and can allow the user of the information processing apparatus 102 to view the contours of the regions having the same shapes to comprehend the contents of the image.

The displaying unit 602 displays the image on the screen based on the positional information 302 and the received color information 401. The displaying unit 602 may display the image on the screen based on the positional information 302 and the color information 401, when the positional information 302 is received to which a determination result to transmit the color information 401 is added. The displaying unit 602 restores the image information based on the positional information 302 and the color information 401. The displaying unit 602 displays the image on the screen based on the image information. As a result, the displaying unit 602 can display the image on the screen and can allow the user of the information processing apparatus 102 to view the image.

### (Specific Example of Transmitting Positional Information 302 and Color Information 401)

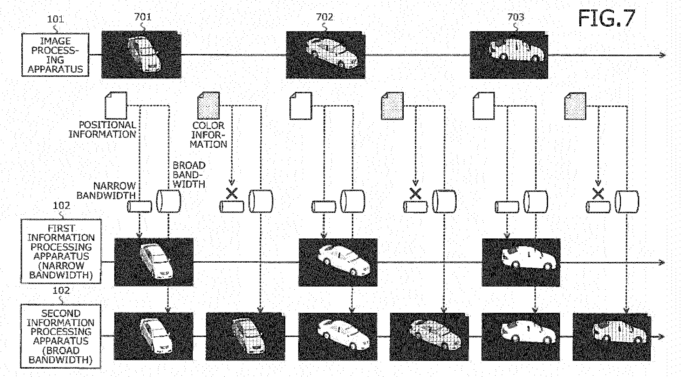

A specific example of transmitting the positional information 302 and the color information 401 created by the image process of the image processing apparatus 101 will be described with reference to FIG. 7.

FIG. 7 is an explanatory diagram of a specific example of transmitting the positional information 302 and the color information 401. In FIG. 7, it is assumed that a bandwidth of a network between the image processing apparatus 101 and a first information processing apparatus 102 is narrower than a bandwidth of a network between the image processing apparatus 101 and a second information processing apparatus 102.

In the example depicted in FIG. 7, (1) based on image information of a first image 701 displayable by the first information processing apparatus 102 and the second information processing apparatus 102, the image processing apparatus 101 creates the positional information 302 of the first image 701. Subsequently, based on the bandwidth of the network between the image processing apparatus 101 and the first information processing apparatus 102, the image processing apparatus 101 determines that the color information 401 of the first image 701 is not to be transmitted to the first information processing apparatus 102. The image processing apparatus 101 creates the positional information packet 300 that includes the created positional information 302 and the color information flag 301 indicating that the color information 401 is not transmitted, and transmits the packet to the first information processing apparatus 102. The first information processing apparatus 102 receives the positional information packet 300 and determines that the color information 401 is not to be transmitted based on the color information flag 301 included in the positional information packet 300. The first information processing apparatus 102 then displays the contour of the first image 701 based on the positional information 302 included in the positional information packet 300.

Based on the bandwidth of the network between the image processing apparatus 101 and the second information processing apparatus 102, the image processing apparatus 101 determines that the color information 401 of the first image 701 is to be transmitted to the second information processing apparatus 102. The image processing apparatus 101 creates the positional information packet 300 that includes the created positional information 302 and the color information flag 301 indicating that the color information 401 is transmitted, and transmits the packet to the second information processing apparatus 102. The second information processing apparatus 102 receives the positional information packet 300 and determines that the color information 401 is to be transmitted based on the color information flag 301 included in the positional information packet 300. The second information processing apparatus 102 then displays the contour of the first image 701 based on the positional information 302 included in the positional information packet 300 and waits until the color information 401 of the first image 701 is received.

(2) The image processing apparatus 101 creates the color information 401 of the first image 701 based on the image information of the first image 701. The image processing apparatus 101 does not transmit the color information packet 400, which includes the color information 401 of the first image 701, to the first information processing apparatus 102 corresponding to the determination that the color information 401 of the first image 701 is not to be transmitted to the first information processing apparatus 102. The first information processing apparatus 102 does not receive the color information packet 400 and therefore, continues to display the contour of the first image 701.

The image processing apparatus 101 creates and transmits the color information packet 400, which includes the created color information 401, to the second information processing apparatus 102 corresponding to the determination that the color information 401 of the first image 701 is to be transmitted to the second information processing apparatus 102. The second information processing apparatus 102 receives the color information packet 400 and displays the first image 701 based on the positional information 302 and the color information 401 included in the color information packet 400.

(3) Based on image information of a second image 702 continuous from the first image 701 and displayable by the first information processing apparatus 102 and the second information processing apparatus 102, the image processing apparatus 101 creates the positional information 302 of the second image 702. Subsequently, based on the bandwidth of the network between the image processing apparatus 101 and the first information processing apparatus 102, the image processing apparatus 101 determines that the color information 401 of the second image 702 is not transmitted to the first information processing apparatus 102. The image processing apparatus 101 creates the positional information packet 300 including the created positional information 302 and the color information flag 301 indicating that the color information 401 is not transmitted, and transmits the packet to the first information processing apparatus 102. The first information processing apparatus 102 receives the positional information packet 300 and determines that the color information 401 is not transmitted based on the color information flag 301 included in the positional information packet 300. The first information processing apparatus 102 then displays the contour of the second image 702 based on the positional information 302 included in the positional information packet 300.

Based on the bandwidth of the network between the image processing apparatus 101 and the second information processing apparatus 102, the image processing apparatus 101 determines that the color information 401 of the second image 702 is to be transmitted to the second information processing apparatus 102. The image processing apparatus 101 creates the positional information packet 300, which includes the created positional information 302 and the color information flag 301 indicating that the color information 401 is transmitted, and transmits the packet to the second information processing apparatus 102. The second information processing apparatus 102 receives the positional information packet 300 and determines that the color information 401 is to be transmitted based on the color information flag 301 included in the positional information packet 300. The second information processing apparatus 102 then displays the contour of the second image 702 based on the positional information 302 included in the positional information packet 300 and waits until the color information 401 of the second image 702 is received.

(4) The image processing apparatus 101 creates the color information 401 of the second image 702 based on the image information of the second image 702. The image processing apparatus 101 does not transmit the color information packet 400, which includes the color information 401 of the second image 702, to the first information processing apparatus 102 corresponding to the determination that the color information 401 of the second image 702 is not to be transmitted to the first information processing apparatus 102. The first information processing apparatus 102 does not receive the color information packet 400 and therefore continues to display the contour of the second image 702.

The image processing apparatus 101 creates and transmits the color information packet 400, which includes the created color information 401, to the second information processing apparatus 102 corresponding to the determination that the color information 401 of the second image 702 is to be transmitted to the second information processing apparatus 102. The second information processing apparatus 102 receives the color information packet 400 and displays the second image 702 based on the positional information 302 and the color information 401 included in the color information packet 400.

(5) Based on image information of a third image 703 continuous from the second image 702 and displayable by the first information processing apparatus 102 and the second information processing apparatus 102, the image processing apparatus 101 creates the positional information 302 of the third image 703. Subsequently, based on the bandwidth of the network between the image processing apparatus 101 and the first information processing apparatus 102, the image processing apparatus 101 determines that the color information 401 of the third image 703 is not to be transmitted to the first information processing apparatus 102. The image processing apparatus 101 creates the positional information packet 300, which includes the created positional information 302 and the color information flag 301 indicating that the color information 401 is not to be transmitted, and transmits the packet to the first information processing apparatus 102. The first information processing apparatus 102 receives the positional information packet 300 and determines that the color information 401 is not to be transmitted based on the color information flag 301 included in the positional information packet 300. The first information processing apparatus 102 then displays the contour of the third image 703 based on the positional information 302 included in the positional information packet 300.

Based on the bandwidth of the network between the image processing apparatus 101 and the second information processing apparatus 102, the image processing apparatus 101 determines that the color information 401 of the third image 703 is to be transmitted to the second information processing apparatus 102. The image processing apparatus 101 creates the positional information packet 300, which includes the created positional information 302 and the color information flag 301 indicating that the color information 401 is to be transmitted, and transmits the packet to the second information processing apparatus 102. The second information processing apparatus 102 receives the positional information packet 300 and determines that the color information 401 is transmitted based on the color information flag 301 included in the positional information packet 300. The second information processing apparatus 102 then displays the contour of the third image 703 based on the positional information 302 included in the positional information packet 300 and waits until the color information 401 of the third image 703 is received.

(6) The image processing apparatus 101 creates the color information 401 of the third image 703 based on the image information of the third image 703. The image processing apparatus 101 does not transmit the color information packet 400, which includes the color information 401 of the third image 703, to the first information processing apparatus 102 corresponding to the determination that the color information 401 of the third image 703 is not transmitted to the first information processing apparatus 102. The first information processing apparatus 102 does not receive the color information packet 400 and therefore, continues to display the contour of the third image 703.

The image processing apparatus 101 creates and transmits the color information packet 400, which includes the created color information 401, to the second information processing apparatus 102 corresponding to the determination that the color information 401 of the third image 703 is to be transmitted to the second information processing apparatus 102. The second information processing apparatus 102 receives the color information packet 400 and displays the third image 703 based on the positional information 302 and the color information 401 included in the color information packet 400.

### (Specific Example of Creating Positional Information 302 and Color Information 401)

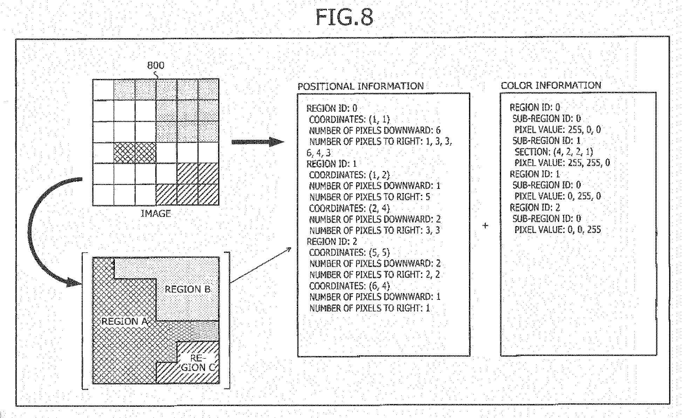

A specific example of creating the positional information 302 and the color information 401 by the image process of the image processing apparatus 101 will be described with reference to FIG. 8.

FIG. 8 is an explanatory diagram of a specific example of creating the positional information 302 and the color information 401. In FIG. 8, the image processing apparatus 101 creates the positional information 302 and the color information 401 based on the image information of an image 800 while selecting pixels of the image 800 in a scanning order.

In the following description, a pixel present in an i-th row and a j-th column of the image 800 may be referred to as a "pixel 8ij". For example, a pixel present in a first row and a first column on the upper left of the image 800 may be referred to as a "pixel 811".

The image processing apparatus 101 selects, for example, the upper-left pixel 811 of the image 800, obtains the pixel value (255,0,0) of the selected pixel 811, identifies a region ID "0" based on the obtained pixel value, and adds a sub-region ID "0" to the obtained pixel value.

For example, the image processing apparatus 101 identifies a region ID that corresponds to the obtained pixel value based on correlation information correlating a range of pixel values and a region ID. The correlation information includes, for example, information correlating the region ID "0" with a pixel value range in which R is the highest of the RGB values and is within a range of 192 to 255.

The correlation information also includes, for example, information correlating the region ID "1" with a pixel value range in which G is the highest of the RGB values and is within a range of 192 to 255. The correlation information also includes, for example, information correlating the region ID "2" with a pixel value range in which B is the highest of the RGB values and is within a range of 192 to 255.

Similarly, the correlation information includes information correlating the region ID "3" with a pixel value range in which R is the highest of the RGB values and is within a range of 128 to 191. Similarly, the correlation information includes information correlating the region ID "4" with a pixel value range in which G is the highest of the RGB values and is within a range of 128 to 191. Similarly, the correlation information includes information correlating the region ID "5" with a pixel value range in which B is the highest of the RGB values and is within a range of 128 to 191.

Similarly, the correlation information includes information correlating the region ID "6" with a pixel value range in which R is the highest of the RGB values and is within a range of 64 to 127. Similarly, the correlation information includes information correlating the region ID "7" with a pixel value range in which G is the highest of the RGB values and is within a range of 64 to 127. Similarly, the correlation information includes information correlating the region ID "8" with a pixel value range in which B is the highest of the RGB values and is within a range of 64 to 127.

Similarly, the correlation information includes information correlating the region ID "9" with a pixel value range in which R is the highest of the RGB values and is within a range of 0 to 63. Similarly, the correlation information includes information correlating the region ID "10" with a pixel value range in which G is the highest of the RGB values and is within a range of 0 to 63. Similarly, the correlation information includes information correlating the region ID "11" with a pixel value range in which B is the highest of the RGB values and is within a range of 0 to 63.

The image processing apparatus 101 then identifies pixels 811, 821, 831, 841, 851, 861 having the same pixel value as the pixel 811 and present successively in the downward direction from the pixel 811. The image processing apparatus 101 calculates the number "6" of the identified pixels 811, 821, 831, 841, 851, 861.

The image processing apparatus 101 then identifies pixels having the same pixel value as the pixel 811 and present successively in the rightward direction from each of the identified pixels 811, 821, 831, 841, 851, 861.

For example, the image processing apparatus 101 identifies the pixel 811 having the same pixel value as the pixel 811 and present successively in the rightward direction from the pixel 811 and calculates the number "1" of the identified pixel 811. The image processing apparatus 101 also identifies pixels 821, 822, 823 having the same pixel value as the pixel 811 and present successively in the rightward direction from the pixel 821 and calculates the number "3" of the identified pixels 821, 822, 823.

The image processing apparatus 101 also identifies pixels 831, 832, 833 having the same pixel value as the pixel 811 and present successively in the rightward direction from the pixel 831 and calculates the number "3" of the identified pixels 831, 832, 833. The image processing apparatus 101 also identifies the pixel 841 having the same pixel value as the pixel 811 and present successively in the rightward direction from the pixel 841 and calculates the number "1" of the identified pixel 841.

The image processing apparatus 101 also identifies pixels 851, 852, 853, 854 having the same pixel value as the pixel 811 and present successively in the rightward direction from the pixel 851 and calculates the number "4" of the identified pixels 851, 852, 853, 854. The image processing apparatus 101 also identifies pixels 861, 862, 863 having the same pixel value as the pixel 811 and present successively in the rightward direction from the pixel 861 and calculates the number "3" of the identified pixels 861, 862, 863.

The image processing apparatus 101 correlates and stores the sub-region ID "0" and the pixel value (255,0,0) with the region ID "0". The image processing apparatus 101 stores the position "1,1" of the selected pixel 811, the number "6" of the pixels present successively in the downward direction, and the numbers "1, 3, 3, 1, 4, 3" of the pixels present successively in the rightward direction as information representing a first region associated with the region ID "0". The image processing apparatus 101 then sets the identified pixels as checked pixels.

Subsequently, the image processing apparatus 101 selects the pixels in the scanning order and selects a pixel 812 in the first row and a second column of the image 800. The image processing apparatus 101 obtains the pixel value (0,255,0) of the selected pixel 812, identifies the region ID "1" based on the obtained pixel value, and adds the sub-region ID "0" to the obtained pixel value.

The image processing apparatus 101 then identifies the pixel 812 having the same pixel value as the pixel 812 and present successively in the downward direction from the pixel 812. The image processing apparatus 101 calculates the number "1" of the identified pixel 812.

The image processing apparatus 101 then identifies pixels 812, 813, 814, 815, 816 having the same pixel value as the pixel 812 and present successively in the rightward direction from the identified pixel 812. The image processing apparatus 101 calculates the number "5" of the identified pixels 812, 813, 814, 815, 816.

The image processing apparatus 101 correlates and stores the sub-region ID "0" and the pixel value (0,255,0) with the region ID "1". The image processing apparatus 101 stores the position "1,2" of the selected pixel, the number "1" of the pixel present successively in the downward direction, and the number "5" of the pixels present successively in the rightward direction as information representing a second region associated with the region ID "1". The image processing apparatus 101 then sets the identified pixels as checked pixels.

Subsequently, the image processing apparatus 101 selects the pixels in the scanning order and selects the pixel 813 in the first row and a third column of the image 800; however, since the selected pixel 813 is already checked, the image processing apparatus 101 does not execute a process for the pixel 813. The image processing apparatus 101 further selects the pixels in the scanning order and does not execute a process for the selected pixels 814, 815, 816, 821, 822, 823 of the image 800 since the pixels 814, 815, 816, 821, 822, 823 are already checked.

The image processing apparatus 101 selects the pixels in the scanning order and selects a pixel 824 that is not yet checked in a second row and a fourth column of the image 800. The image processing apparatus 101 obtains the pixel value (0,255,0) of the selected pixel 824, identifies the region ID "1" based on the obtained pixel value, and adds the sub-region ID "0" to the obtained pixel value.

The image processing apparatus 101 then identifies pixels 824, 834 having the same pixel value as the pixel 824 and present successively in the downward direction from the pixel 824. The image processing apparatus 101 calculates the number "2" of the identified pixels 824, 834.

The image processing apparatus 101 then identifies pixels 824, 825, 826 having the same pixel value as the pixel 824 and present successively in the rightward direction from the identified pixel 824. The image processing apparatus 101 calculates the number "3" of the identified pixels 824, 825, 826.

The image processing apparatus 101 also identifies pixels 834, 835, 836 having the same pixel value as the pixel 824 and present successively in the rightward direction from the identified pixel 834. The image processing apparatus 101 calculates the number "3" of the identified pixels 834, 835, 836.

The image processing apparatus 101 correlates and stores the sub-region ID "0" and the pixel value (0,255,0) with the region ID "1". The image processing apparatus 101 stores the position "2,4" of the selected pixel, the number "2" of the pixels present successively in the downward direction, and the numbers "3, 3" of the pixels present successively in the rightward direction as information representing a third region associated with the region ID "1". The image processing apparatus 101 then sets the identified pixels as checked pixels.

Subsequently, the image processing apparatus 101 selects the pixels in the scanning order and does not execute a process for the selected pixels 825, 826, 831, 832, 833, 834, 835, 836, 841 of the image 800 since the pixels 825, 826, 831, 832, 833, 834, 835, 836, 841 are already checked.

The image processing apparatus 101 selects the pixels in the scanning order and selects a pixel 842 that is not yet checked in a fourth row and the second column of the image 800. The image processing apparatus 101 obtains the pixel value (255,255,0) of the selected pixel 842, identifies the region ID "0" based on the obtained pixel value, and adds the sub-region ID "1" to the obtained pixel value.

The image processing apparatus 101 then identifies the pixel 842 having the same pixel value as the pixel 842 and present successively in the downward direction from the pixel 842. The image processing apparatus 101 calculates the number "1" of the identified pixel 842.

The image processing apparatus 101 then identifies pixels 842, 843 having the same pixel value as the pixel 842 and present successively in the rightward direction from the identified pixel 842. The image processing apparatus 101 calculates the number "2" of the identified pixels 842, 843.

The image processing apparatus 101 correlates and stores the sub-region ID "1" and the pixel value (255,255,0) with the region ID "0". The image processing apparatus 101 stores the position "4,2" of the selected pixel, the number "1" of the pixel present successively in the downward direction, and the number "2" of the pixels present successively in the rightward direction as information representing a fourth region associated with the region ID "0".

If the sub-region ID is not "0", the image processing apparatus 101 creates a region section "4,2,2,1" and, correlates and stores the created region section "4,2,2,1" with the sub-region ID "1." The region section "4,2,2,1" indicates a section of a rectangular shape corresponding to two pixels in the rightward direction and one pixel in the downward direction from the pixel 842 in the fourth row and the second column. The image processing apparatus 101 then sets the identified pixels as checked pixels.

Subsequently, the image processing apparatus 101 selects the pixels in the scanning order and does not execute a process for the selected pixel 843 of the image 800 since the pixel 843 is already checked.

The image processing apparatus 101 selects the pixels in the scanning order and selects a pixel 844 that is not yet checked in the fourth row and a fourth column of the image 800. The image processing apparatus 101 obtains the pixel value (255,0,0) of the selected pixel 844, identifies the region ID "0" based on the obtained pixel value, and adds the sub-region ID "0" to the obtained pixel value.

The image processing apparatus 101 then identifies the pixel 844 having the same pixel value as the pixel 844 and present successively in the downward direction from the pixel 844. The image processing apparatus 101 calculates the number "1" of the identified pixel 844.

The image processing apparatus 101 then identifies pixels 844, 845, 846 having the same pixel value as the pixel 844 and present successively in the rightward direction from the identified pixel 844. The image processing apparatus 101 calculates the number "3" of the identified pixels 844, 845, 846.

The image processing apparatus 101 correlates and stores the sub-region ID "0" and the pixel value (255,0,0) with the region ID "0". The image processing apparatus 101 stores the position "4,4" of the selected pixel, the number "1" of pixels present successively in the downward direction, and the number "3" of pixels present successively in the rightward direction as information representing a fifth region associated with the region ID "0". The image processing apparatus 101 then sets the identified pixels as checked pixels.

Subsequently, the image processing apparatus 101 selects the pixels in the scanning order and does not execute a process for the selected pixels 845, 846, 851, 852, 853, 854 of the image 800 since the pixels 845, 846, 851, 852, 853, 854 are already checked.

The image processing apparatus 101 selects the pixels in the scanning order and selects a pixel 855 that is not yet checked in a fifth row and a fifth column of the image 800. The image processing apparatus 101 obtains the pixel value (0,0,255) of the selected pixel 855, identifies the region ID "2" based on the obtained pixel value, and adds the sub-region ID "0" to the obtained pixel value.

The image processing apparatus 101 then identifies the pixels 855, 856 having the same pixel value as the pixel 855 and present successively in the downward direction from the pixel 855. The image processing apparatus 101 calculates the number "2" of the identified pixels 855, 856.

The image processing apparatus 101 identifies pixels 855, 856 having the same pixel value as the pixel 855 and present successively in the rightward direction from the identified pixel 855. The image processing apparatus 101 calculates the number "2" of the identified pixels 855, 856.

The image processing apparatus 101 also identifies pixels 865, 866 having the same pixel value as the pixel 855 and present successively in the rightward direction from the identified pixel 865. The image processing apparatus 101 calculates the number "2" of the identified pixels 865, 866.

The image processing apparatus 101 correlates and stores the sub-region ID "0" and the pixel value (0,0,255) with the region ID "2." The image processing apparatus 101 stores the position "5,5" of the selected pixel, the number "2" of the pixels present successively in the downward direction, and the numbers "2, 2" of the pixels present successively in the rightward direction as information representing a sixth region associated with the region ID "2". The image processing apparatus 101 then sets the identified pixels as checked pixels.

Subsequently, the image processing apparatus 101 selects the pixels in the scanning order and does not execute a process for the selected pixels 856, 861, 862, 863 of the image 800 since the pixels 856, 861, 862, 863 are already checked.

The image processing apparatus 101 selects the pixels in the scanning order and selects a pixel 864 that is not yet checked in a sixth row and the fourth column of the image 800. The image processing apparatus 101 obtains the pixel value (0,0,255) of the selected pixel 864, identifies the region ID "2" based on the obtained pixel value, and adds the sub-region ID "0" to the obtained pixel value.

The image processing apparatus 101 then identifies the pixel 864 having the same pixel value as the pixel 864 and present successively in the downward direction from the pixel 864. The image processing apparatus 101 calculates the number "1" of the identified pixel 864.

The image processing apparatus 101 identifies the unchecked pixel 864 having the same pixel value as the pixel 864 and present successively in the rightward direction from the identified pixel 864. The image processing apparatus 101 calculates the number "1" of the identified pixel 864.

The image processing apparatus 101 associated and stores the sub-region ID "0" and the pixel value (0,0,255) with the region ID "2." The image processing apparatus 101 stores the position "6,4" of the selected pixel, the number "1" of the pixels present successively in the downward direction, and the number "1" of the pixels present successively in the rightward direction as information representing a seventh region associated with the region ID "2". The image processing apparatus 101 then sets the identified pixels as checked pixels.

Subsequently, the image processing apparatus 101 selects the pixels in the scanning order and does not execute a process for the selected pixels 865, 866 of the image 800 since the pixels 865, 866 are already checked.

When the selection is completed, the image processing apparatus 101 creates the positional information 302 based on the positions of the pixels correlated with the region ID, the numbers of pixels present successively in the downward direction, and the numbers of pixels present successively in the rightward direction.

For example, the image processing apparatus 101 combines the first region, the fourth region, and the fifth region represented by the information correlated with the same region ID "0" to form a region A. In this case, since the fourth region and the fifth region are successively present in the rightward direction of the first region, the information representing the first region is combined with the information representing the fourth region and the information representing the fifth region.

For example, the image processing apparatus 101 adds the numbers of the pixels included in the fourth and fifth regions to the numbers "1, 3, 3, 1, 4, 3" of the pixels present successively in the rightward direction in the information representing the first region correlated with the region ID "0." As a result, the image processing apparatus 101 creates the numbers "1, 3, 3, 6, 4, 3" of the pixels present successively in the rightward direction and deletes the information representing the fourth region and the information representing the fifth region.

The image processing apparatus 101 creates information representing the region A including the information representing the first region. For example, the image processing apparatus 101 creates information correlating the region ID "0", the pixel position "1,1", the number "6" of the pixels present successively in the downward direction, and the numbers "1, 3, 3, 6, 4, 3" of the pixels present successively in the rightward direction, as the information representing the region A. The image processing apparatus 101 adds the created information representing the region A to the positional information 302.

Although the image processing apparatus 101 combines information representing a region with information representing another region present successively in the rightward direction from the region in this description, this is not a limitation. For example, the image processing apparatus 101 may combine information representing a region with information representing another region having the same left end column as the region and present successively in the downward direction.

The image processing apparatus 101 adds information correlating the region ID "0", the sub-region ID "0" correlated with the region ID "0", and the pixel value (255,0,0) to the color information 401 as information representing the color of the region with the sub-region ID "0" in the region A. The image processing apparatus 101 also adds information correlating the region ID "0", the sub-region ID "1" correlated with the region ID "0," the pixel value (255,255,0), and the section "4,2,2,1" to the color information 401 as information representing the color of the region with the sub-region ID "1" in the region A.

The image processing apparatus 101 combines the second region and the third region represented by the information correlated with the same region ID "1" to form a region B. The image processing apparatus 101 creates information representing the region B including the information representing the second region and the information representing the third region. For example, the image processing apparatus 101 adds information correlating the region ID "1," the pixel position "1,2," the number "1" of the pixel present successively in the downward direction, and the number "5" of the pixels present successively in the rightward direction to the positional information 302 as the information representing the region B. The image processing apparatus 101 also adds information correlating the region ID "1," the pixel position "2,4," the number "2" of the pixels present successively in the downward direction, and the numbers "3, 3" of the pixels present successively in the rightward direction to the positional information 302 as the information representing the region B.

The image processing apparatus 101 adds information correlating the region ID "1", the sub-region ID "0" correlated with the region ID "1", and the pixel value (0,255,0) to the color information 401 as information representing the color of the region with the sub-region ID "0" in the region B.

The image processing apparatus 101 combines the sixth region and the seventh region represented by the multiple pieces of information correlated with the same region ID "2" to form a region C. The image processing apparatus 101 creates information representing the region C including the information representing the sixth region and the information representing the seventh region. For example, the image processing apparatus 101 adds information correlating the region ID "2", the pixel position "5,5", the number "2" of the pixels present successively in the downward direction, and the numbers "2, 2" of the pixels present successively in the rightward direction to the positional information 302 as the information representing the region C. The image processing apparatus 101 also adds information correlating the region ID "2," the pixel position "6,4," the number "1" of the pixel present successively in the downward direction, and the number "1" of the pixel present successively in the rightward direction to the positional information 302 as the information representing the region C.

The image processing apparatus 101 adds information correlating the region ID "2", the sub-region ID "0" correlated with the region ID "2", and the pixel value (0,0,255) to the color information 401 as information representing the color of the region with the sub-region ID "0" in the region C. As a result, the image processing apparatus 101 can create the positional information 302 with an information amount reduced as compared to the image information and can create the color information 401 capable of being combined with the positional information 302 to restore the image information.

Although the image processing apparatus 101 identifies the region ID based on the correlation information in this description, this is not a limitation. For example, the image processing apparatus 101 may identify the region ID corresponding to the pixel value based on a calculation formula for calculating the region ID from the pixel value. For example, the calculation formula is a formula for calculating, as the region ID, an integer portion of a quotient obtained by dividing R of R, G, and B of the pixel value by 64. Alternatively, the calculation formula may be a formula for calculating, as the region ID, an integer portion of a quotient obtained by dividing an average value of R, G, and B of the pixel value by 64.

### (Specific Example of Transmitted Data Amount)

A specific example of an amount of data transmitted by the image processing apparatus 101 will be described. Description will be made of a difference in the data amount when the image processing apparatus 101 encodes and transmits the image information and when the image processing apparatus 101 encodes and transmits the positional information 302 and the color information 401.

The difference will be described by taking a landscape image as an example. For example, the landscape image is an image characterized by the inclusion of gradations and the representation of objects such as trees. When the image information of the landscape image is encoded, for example, the data amount is 1074860 bytes. On the other hand, if the positional information 302 and the color information 401 are created from the image information and the positional information 302 and the color information 401 are encoded, for example, the data amounts are 370812 bytes and 684707 bytes.

Here, the difference will be described by taking a box image as an example. The box image is an image characterized by a fewer number of colors and smooth gradations. When the image information of the box image is encoded, for example, the data amount is 555494 bytes. On the other hand, if the positional information. 302 and the color information 401 are created from the image information and the positional information 302 and the color information 401 are encoded, for example, the data amounts are 179997 bytes and 467828 bytes.

Here the difference will be described by taking a circuit image as an example. The circuit image is an image characterized by, for example, fewer gradations and wirings etc. represented by edges. When the image information of the circuit image is encoded, for example, the data amount is 15382 bytes. On the other hand, if the positional information 302 and the color information 401 are created from the image information and the positional information 302 and the color information 401 are encoded, for example, the data amounts are 15366 bytes and 58 bytes.

Here the difference will be described by taking a table image as an example. For example, the table image is an image characterized by the absence of gradations and the representation of characters and numerals. When the image information of the table image is encoded, for example, the data amount is 26288 bytes. On the other hand, if the positional information 302 and the color information 401 are created from the image information and the positional information 302 and the color information 401 are encoded, for example, the data amounts are 26157 bytes and 11544 bytes.

As described above, although the data amount of the positional information 302 differs depending on the characteristics of an image, the data amount in the case of encoding the positional information 302 is reduced as compared to the data amount in the case of encoding the image information. Therefore, the information processing apparatus 102 can update the screen in a shorter time when the encoded positional information 302 is received to update the screen based on the positional information 302 as compared to when the image information is receive to update the screen based on the image information. As a result, the user of the information processing apparatus 102 can view the contours of the regions having the same shapes and comprehend the contents of the image sooner. Additionally, the image processing apparatus 101 can separately transmit the positional information 302 and the color information 401, thereby reducing the amount of data transmitted per unit time and preventing burst traffic.

### (Example of Transmission Process Procedure)

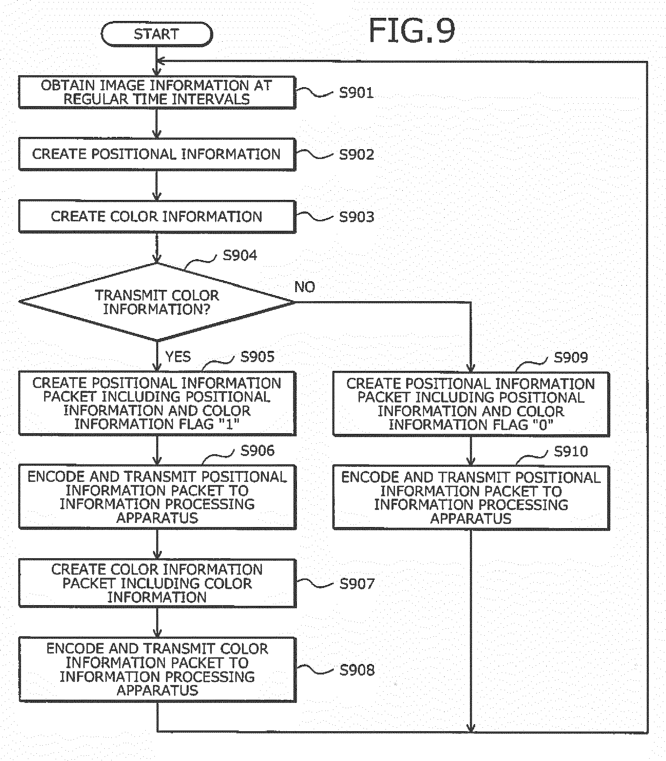

An example of a transmission process procedure of the image processing apparatus 101 will be described with reference to FIG. 9.

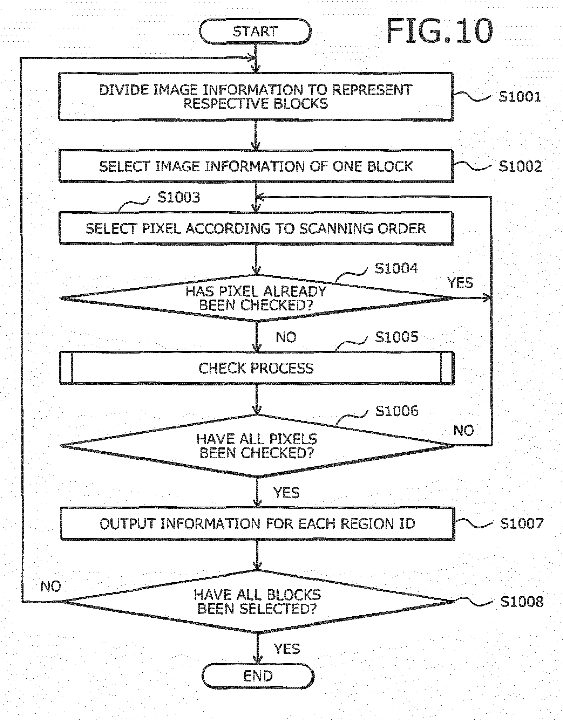

FIG. 9 is a flowchart of an example of the transmission process procedure. In FIG. 9, first, the image processing apparatus 101 obtains image information at regular time intervals (step S901). The image processing apparatus 101 creates the positional information 302 based on the obtained image information (step S902). The image processing apparatus 101 creates the color information 401 based on the obtained image information (step S903). An example of a creation process procedure of creating the positional information 302 and the color information 401 will be described later with reference to FIG. 10.

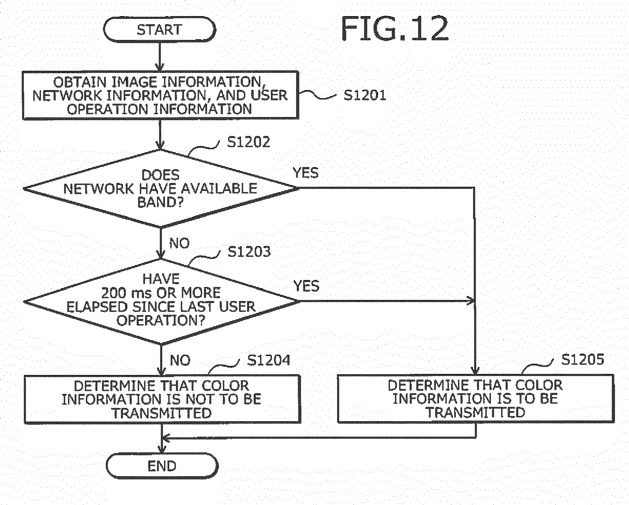

The image processing apparatus 101 determines whether the color information 401 is to be transmitted (step S904). A determination process of determining whether the color information 401 is to be transmitted will be described later with reference to FIG. 12. If the color information 401 is to be transmitted (step S904: YES), the image processing apparatus 101 creates the positional information packet 300, which includes the positional information 302 and has the color information flag 301 set to "1" (step S905). The image processing apparatus 101 encodes and transmits the positional information packet 300 to the information processing apparatus 102 (step S906).

The image processing apparatus 101 creates the color information packet 400, which includes the color information 401 (step S907). The image processing apparatus 101 encodes and transmits the color information packet 400 to the information processing apparatus 102 (step S908). The image processing apparatus 101 returns to the operation at step S901.

On the other hand, if the color information 401 is not to be transmitted (step S904: NO), the image processing apparatus 101 creates the positional information packet 300, which includes the positional information 302 and has the color information flag 301 set to "0" (step S909). The image processing apparatus 101 encodes and transmits the positional information packet 300 to the information processing apparatus 102 (step S910). The image processing apparatus 101 returns to the operation at step S901.

As a result, the image processing apparatus 101 can transmit the positional information packet 300 to the information processing apparatus 102 to cause the information processing apparatus 102 to display the regions having the same shapes as the respective regions of the multiple regions divided from the image. The image processing apparatus 101 can transmit the positional information packet 300 and the color information packet 400 to the information processing apparatus 102 to cause the information processing apparatus 102 to display the image.

### (Example of Creation Process Procedure)

An example of the creation process procedure of creating the positional information packet 300 described at step S902 of FIG. 9 will be described with reference to FIG. 10.

FIG. 10 is a flowchart of an example of the creation process procedure. In FIG. 10, the image processing apparatus 101 divides the image information into pieces of image information representing respective blocks of multiple respective blocks (step S1001). The image processing apparatus 101 selects image information of one of the blocks (step S1002).

The image processing apparatus 101 selects a pixel in the selected block in a scanning order (step S1003). The image processing apparatus 101 determines whether the selected pixel is a checked pixel (step S1004). If the pixel is a checked pixel (step S1004: YES), the image processing apparatus 101 returns to the operation at step S1003.

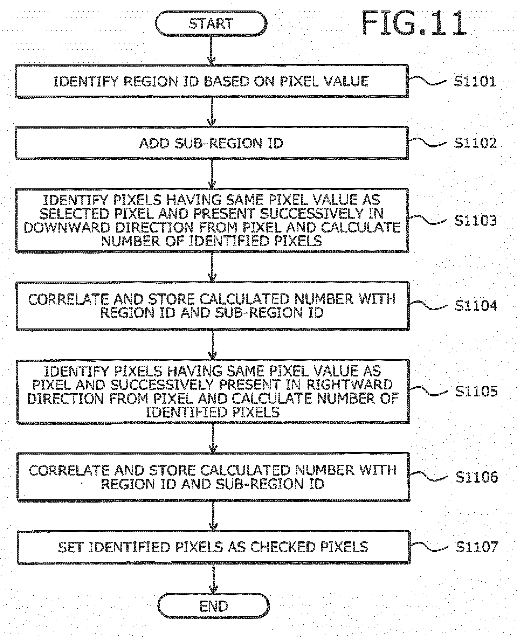

On the other hand, if the pixel is not a checked pixel (step S1004: NO), the image processing apparatus 101 identifies in the image, a region that includes the selected pixel or at least includes the selected pixel among the pixels present successively from the selected pixel (step S1005). An example of a check process procedure of identifying a region will be described later with reference to FIG. 11.

The image processing apparatus 101 determines whether all the pixels have been checked (step S1006). If an unchecked pixel is present (step S1006: NO), the image processing apparatus 101 returns to the operation at step S103.

On the other hand, if all the pixels have been checked (step S1006: YES), the image processing apparatus 101 creates information representing the respective regions for the region IDs of the respective regions and outputs the information as the positional information 302 (step S1007). The image processing apparatus 101 determines whether all the blocks have been selected (step S1008). If not all the blocks have been selected (step S1008: NO), the image processing apparatus 101 returns to the operation at step S1001.

On the other hand, if all the blocks have been selected (step S1008: YES), the image processing apparatus 101 terminates the creation process. As a result, the image processing apparatus 101 can create the positional information 302 and the color information 401.

### (Example of Check Process Procedure)

An example of the check process procedure described at step S1005 of FIG. 10 will be described with reference to FIG. 11.

FIG. 11 is a flowchart of an example of the check process procedure. In FIG. 11, the image processing apparatus 101 identifies a region ID based on a pixel value (step S1101).

The image processing apparatus 101 adds a sub-region ID (step S1102). The image processing apparatus 101 identifies pixels having the same pixel value as the selected pixel and present successively in the downward direction from the pixel and calculates the number of the identified pixels (step S1103).

The image processing apparatus 101 correlates and stores the calculated number with the region ID and the sub-region ID (step S1104). Subsequently, for each of the identified pixels present in the downward direction, the image processing apparatus 101 identifies pixels having the same pixel value as the pixel and successively present in the rightward direction from the pixel and calculates the number of the identified pixels (step S1105).

The image processing apparatus 101 correlates and stores the calculated number with the region ID and the sub-region ID (step S1106). The image processing apparatus 101 sets the identified pixels as checked pixels (step S1107) and terminates the check process. As a result, the image processing apparatus 101 can divide the image into multiple regions.

### (Example of Determination Process Procedure)

An example of a determination process procedure described at step S904 of FIG. 9 will be described with reference to FIG. 12.

FIG. 12 is a flowchart of an example of the determination process procedure. In FIG. 12, the image processing apparatus 101 obtains the image information, the network information, and the user operation information (step S1201). The image processing apparatus 101 determines whether the network has available band based on the network information (step S1202). In this case, the network having available band means that the communication time indicated by the network information is equal to or less than a predetermined value, for example.

If the network does not have available band (step S1202: NO), the image processing apparatus 101 determines based on the user operation information whether 200 ms or more have elapsed since the last user operation (step S1203). The last user operation is an operational input performed by the user of the information processing apparatus 102 to make an image display request, for example. Alternatively, the last user operation may be an operational input performed by the user of the information processing apparatus 101 to make an image display request, for example. If at least 200 ms have not elapsed (step S1203: NO), the image processing apparatus 101 determines that the color information 401 is not to be transmitted (step S1204), and terminates the determination process.

On the other hand, if the network has available band at step S120 (step S1202: YES) or if at least 200 ms have elapsed at step S1203 (step S1203: YES), the image processing apparatus 101 determines that the color information 401 is to be transmitted (step S1205), and terminates the determination process.

As a result, the image processing apparatus 101 can reduce network traffic by refraining from transmitting the color information 401 when the bandwidth of the network is narrow between the image processing apparatus 101 and the information processing apparatus 102. When the screen of the information processing apparatus 102 is not updated for a predetermined time or more, the image processing apparatus 101 can determine to transmit the color information 401 to allow the user of the information processing apparatus 102 to view the image.

### (Example of Display Process Procedure)

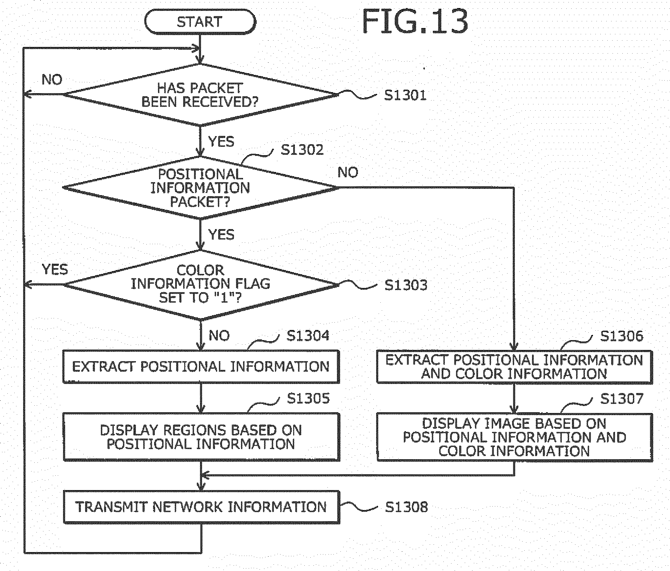

An example of a display process procedure of the information processing apparatus 102 will be described with reference to FIG. 13.

FIG. 13 is a flowchart of an example of the display process procedure. In FIG. 13, the information processing apparatus 102 determines whether a packet has been received from the image processing apparatus 101 (step S1301). If a packet has not been received (step S1301: NO), the information processing apparatus 102 returns to the operation at step S1301.

On the other hand, if a packet has been received (step S1301: YES), the information processing apparatus 102 determines based on the identification information included in the received packet whether the received packet is a positional information packet 300 (step S1302).

If the received packet is a positional information packet 300 (step S1302: YES), the information processing apparatus 102 determines whether the color information flag 301 is set to "1" (step S1303). If the color information flag 301 is set to "1" (step S1303: YES), the information processing apparatus 102 returns to the operation at step S1301.

On the other hand, if the color information flag 301 is set to "0" (step S1303: NO), the information processing apparatus 102 extracts the positional information 302 from the received positional information packet 300 (step S1304). The information processing apparatus 102 displays the regions in the image based on the extracted positional information 302 (step S1305). The information processing apparatus 102 goes to the operation at step S1308.

If the received packet is the color information packet 400 at step S1302 (step S1302: NO), the information processing apparatus 102 extracts the positional information 302 from the positional information packet 300 received earlier and extracts the color information 401 from the color information packet 400 received subsequently (step S1306). The information processing apparatus 102 displays the image based on the positional information 302 and the color information 401 (step S1307).

The information processing apparatus 102 transmits the network information to the image processing apparatus 101. (step S1308) and returns to the operation at step S1301. As a result, when receiving the positional information 302, the information processing apparatus 102 can display the regions having the same shapes as the respective regions on the screen and can allow the user of the information processing apparatus 102 to view the contours of the regions having the same shapes to comprehend the contents of the image. When receiving the color information 401, the information processing apparatus 102 can display the image on the screen and can allow the user of the information processing apparatus 102 to view the image.

As described above, the image processing apparatus 101 can divide the image into multiple regions, create the positional information 302 that indicates positions of regions having the same shapes as the respective regions, and transmit the positional information 302 to the information processing apparatus 102. As a result, the image processing apparatus 101 can decrease the amount of data transmitted to the information processing apparatus 102 and reduce the time consumed for transmission to the information processing apparatus 102. Therefore, the information processing apparatus 102 can reduce the time required for receiving the positional information 103 and updating the screen after transmitting an operational input as compared to the case of receiving the image information. The information processing apparatus 102 can receive the positional information 103 and display the regions having the same shapes on the screen. Thus, since the regions having the same shapes are displayed on the screen of the information processing apparatus 102, the user of the information processing apparatus 102 can view the contours of the regions having the same shapes to comprehend the contents of the image. The image processing apparatus 101 can decrease the amount of data transmitted per unit time to the information processing apparatus 102 to suppress an occurrence of burst traffic.

The image processing apparatus 101 can create the color information 401 that indicates pixel values of pixels included in the regions having the same shapes displayed on the screen and transmit the color information 401 to the information processing apparatus 102 after executing the process of transmitting the positional information 302. As a result, the information processing apparatus 102 can display the image on the screen based on the positional information 302 and the color information 401. Therefore, the user of the information processing apparatus 102 can view the image.

The image processing apparatus 101 can determine whether the color information 401 is to be transmitted, based on the communication time required for the data communication with the information processing apparatus 102, and can transmit the color information 401 corresponding to a determination that the color information 401 is to be transmitted. As a result, the image processing apparatus 101 can refrain from transmitting the color information 401 to suppress a network traffic in such a case that the network to the information processing apparatus 102 is poor in quality.

The image processing apparatus 101 can determine whether the color information 401 is to be transmitted, based on the elapsed time from reception of an image display request from the information processing apparatus 102, and can transmit the color information 401 according to the determination that the color information 401 is to be transmitted. As a result, the image processing apparatus 101 can transmit the color information 401 and display the image on the screen of the information processing apparatus 102 when the image has not changed.

The image processing apparatus 101 can add to the positional information 302 and transmit a result of determination on whether the color information 401 is to be transmitted. As a result, the information processing apparatus 102 can determine whether the color information 401 is to be transmitted from the image processing apparatus 101 and when the color information 401 is not to be transmitted, the information processing apparatus 102 can display the regions having the same shapes on the screen based on the positional information 302. On the other hand, when the color information 401 is to be transmitted, the information processing apparatus 102 can wait until the color information 401 is received, and after receiving the color information 401, can display the image on the screen based on the positional information 302 and the color information 401. Therefore, the user of the information processing apparatus 102 can view only the original image.

The image processing method described in the present embodiment may be implemented by executing a prepared program on a computer such as a personal computer and a workstation. This image processing program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: image processing apparatus
- 102: information processing apparatus
- 501: dividing unit
- 502: first creating unit
- 503: obtaining unit
- 504: measuring unit
- 505: determining unit
- 506: second creating unit
- 507: first transmitting unit
- 508: second transmitting unit
- 601: receiving unit
- 602: displaying unit

## Claims

1. An image processing program that causes a computer to execute a process comprising:
dividing an image to be displayed on a screen of an information processing apparatus connected through a network, into a plurality of regions based on a pixel value of pixels included in the image;
creating positional information that indicates positions of regions that have same shapes as respective regions of the plurality of regions and that are to be displayed at positions on the screen corresponding to positions of the respective regions in the image; and
transmitting the created positional information to the information processing apparatus.

2. The image processing program according to claim 1, the process further comprising:
creating color information that indicates pixel values of pixels included in the regions having the same shapes as the respective regions, based on pixel values of pixels included in the respective regions, and
transmitting the color information to the information processing apparatus after transmitting the positional information.

3. The image processing program according to claim 2, the process further comprising:
obtaining a communication time required for data communication between the computer and the information processing apparatus; and
determining based on the obtained communication time, whether the color information is to be transmitted, wherein
the transmitting the color information includes transmitting the color information corresponding to a determination that the color information is to be transmitted.

4. The image processing program according to claim 2 or 3, the process further comprising:
measuring an elapsed time from reception of a display request for the image, from the information processing apparatus; and
determining based on the measured elapsed time, whether the color information is to be transmitted, wherein
the transmitting the color information includes transmitting the color information corresponding to a determination that the color information is to be transmitted.

5. The image processing program according to claim 3 or 4, wherein
the transmitting the position information includes adding to the positional information, a result of the determining whether the color information, is to be transmitted and transmitting the positional information.

6. The image processing program according to any one of claims 2 to 5, the process further comprising:
encoding the positional information based on an encoding method corresponding to a decoding method implemented by the information processing apparatus, and
encoding the color information based on the encoding method, wherein
the transmitting the positional information includes transmitting the encoded positional information, and
the transmitting the color information includes transmitting the encoded color information.

7. A display program causing a computer to execute a process comprising:
receiving positional information from an image processing apparatus, the positional information indicating positions of regions having same shapes as respective regions of a plurality regions divided from an image to be displayed on a screen of the computer, the regions having the same shapes as the respective regions being displayed at positions on the screen corresponding to positions of the respective regions in the image; and
displaying the regions having the same shapes as the respective regions, at positions on the screen indicated by the received positional information.

8. The display program of claim 7, the process further comprising:
receiving color information from the image processing apparatus, the color information indicating pixel values of pixels included in the regions having the same shapes as the respective regions; and
displaying the image on the screen based on the positional information and the received color information.

9. The display program of claim 8, wherein
the receiving the positional information includes receiving from the image processing apparatus, the positional information to which a result of determination concerning whether the image processing apparatus transmits the color information is added, and
the displaying the regions having the same shapes as the respective regions includes displaying the regions at positions on the screen indicated by the positional information in response to receiving the positional information to which is added, a result of a determination that the color information is not to be transmitted, and
the displaying the image includes displaying the image on the screen based on the positional information and the color information in response to receiving the positional information to which is added, a result of a determination that the color information is to be transmitted.

10. An image processing method comprising:
dividing, by a computer, an image to be displayed on a screen of an information processing apparatus connected through a network, into a plurality of regions based on a pixel value of pixels included in the image;
creating, by the computer, positional information that indicates positions of regions that have same shapes as respective regions of the plurality of regions and that are to be displayed at positions on the screen corresponding to positions of the respective regions in the image; and
transmitting, by the computer, the created positional information to the information processing apparatus.

11. A display method comprising:
receiving, by a computer, positional information from an image processing apparatus, the positional information indicating positions of regions having same shapes as respective regions of a plurality regions divided from an image to be displayed on a screen of the computer, the regions having the same shapes as the respective regions being displayed at positions on the screen corresponding to positions of the respective regions in the image; and
displaying, by the computer, the regions having the same shapes as the respective regions, at positions on the screen indicated by the received positional information.

12. An image processing apparatus comprising:
a dividing unit configured to divide an image to be displayed on a screen of an information processing apparatus connected through a network, into a plurality of regions based on a pixel value of pixels included in the image;
a creating unit configured to create positional information that indicates positions of regions that have same shapes as respective regions of the plurality of regions and that are to be displayed at positions on the screen corresponding to positions of the respective regions in the image; and
a transmitting unit configured to transmit the created positional information to the information processing apparatus.

13. An information processing apparatus comprising:
a receiving unit configured to receive positional information from an image processing apparatus, the positional information indicating positions of regions having same shapes as respective regions of a plurality regions divided from an image to be displayed on a screen of the computer, the regions having the same shapes as the respective regions being displayed at positions on the screen corresponding to positions of the respective regions in the image; and
a displaying unit configured to display the regions having the same shapes as the respective regions, at positions on the screen indicated by the received positional information.
